# EUROPEAN PATENT SPECIFICATION

(11) **EP 3 739 135 B1**
(45) Date of publication and mention of the grant of the patent: **17.01.2024**
(21) Application number: 20174835.7
(22) Date of filing: 14.05.2020
(51) Int. Cl.: E03F 5/04, F16K 15/14, E03C 1/298

(54) **ELONGATE SILICONE VALVE**
LÄNGLICHES SILIKONVENTIL
SOUPAPE DE SILICONE ALLONGÉE

(30) Priority: 14.05.2019 NL 2023131
(43) Date of publication of application: 18.11.2020
(73) Proprietor: Easy Sanitary Solutions B.V., 7575 BK Oldenzaal (NL)
(72) Inventor: Keizers, Jurgen Hendrik Peter Joseph, 7575 BK Oldenzaal (NL)
(74) Representative: Patentanwälte Ruff, Wilhelm, Beier, Dauster & Partner mbB

(56) References cited:
- WO-A1-2017/132190
- CH-A- 364 392
- US-A- 2 644 663
- US-A1- 2005 211 735

## Description

The invention relates to a valve for an elongate inflow opening according to the preamble of claim 1.

Such a valve is for instance known from US 2644663 or EP 2757205. Described herein is an elongate flap which lies against an elongate wall of an elongate inflow opening. When the elongate flap is clamped in a drain along a longitudinal edge only, it is difficult to ensure a good seal along the two short sides of the elongate flap because the flexible material of the flap lies against a fixed wall of the drain.

EP 2757205 also describes a variant wherein the two short sides are also clamped in the drain. The drawback of this embodiment is that clamping the elongate flexible flap along three sides considerably limits the movability of the flap. The flexible flap will hereby bend away only partially when allowing water to pass, and the throughflow will consequently be impeded.

US 3047013 describes a valve for a round inflow opening. The sealing body is thin-walled and more or less conical. Provided in the sealing body is a cross-shaped cut whereby the conical form is divided into four quarters.

When allowing water to pass, the four quarters will be urged apart, but because the conical form is a three-dimensional form, each quarter will have to be deformed, and more than just bending of the material will take place, when water passes through. This deformation will impede the throughflow, whereby the flow rate through the valve will be limited.

US 5794661 describes a valve from a sheet of flexible material which is provided with a star-shaped cut. This valve is clamped in a round inflow opening. The star-shaped cut creates pie wedge-shaped sealing surfaces which bend away along the periphery of the valve for the purpose of allowing water to pass. Due to the round shape of the valve and the round clamping of the valve, the bend line will be curved. When a sealing surface bends away, the sealing surface will hereby not only bend but also deform, which will impede throughflow.

In addition, the star-shaped incision is not suitable for application in an elongate valve because either the star-shaped incision will be given a more oval shape, whereby the pie wedge-shaped sealing surfaces will have different sizes and will thereby also bend away differently, or, when a round star-shaped incision is applied, the width of the elongate valve will determine the size of the cut, and a large part of the valve will be unable to bend away.

It is now an object of the invention to reduce the above stated drawbacks.

This object is achieved according to the invention with a valve according to claim 1.

Because the connecting cut extends in longitudinal direction of the elongate sealing body, a large part of the surface area of the sealing body is used to allow water to pass. In addition, the two cuts arranged at a mutual distance ensure that at least a part of the sealing body can bend away uniformly along the whole length of the connecting cut and thus allow water to pass. Because two cuts arranged at a mutual distance are arranged on either side of the part that bends away, little to no deformation will occur of the part that bends away.

In the valve according to the invention the two cuts arranged at a mutual distance are parallel, and the connecting cut extends perpendicularly of the two cuts arranged at a mutual distance, such that an H-shaped or U-shaped cut is formed.

The sealing body is preferably made of silicone. Silicone is resilient, whereby the parts will readily return to a sealing position after water has pressed parts of the sealing body away. The edges of a cut in silicone can moreover easily lie sealingly against each other.

In the valve according to the invention depending flanges lying against each other are provided at least along the edges of the connecting cut.

Depending flanges lying against each other are according to the invention additionally provided along the edges of the two parallel cuts.

The depending flanges provide for a greater contact surface around the cuts, whereby a good seal is still obtained, even if there is some variation in the parts that bend away, when water no longer flows past.

In yet another embodiment of the valve according to the invention the upper surface of the sealing body slopes from the mounting edge down to and in a direction perpendicularly of the one single connecting cut.

The downward sloping upper surface forms a funnel, so that a small water column is formed on the H-shaped cut, which column contributes to opening of the valve. This makes it possible to make the valve comparatively stiffer, so that the valve seals more tightly when no water need be discharged.

In another embodiment of the valve according to the invention the sealing body has a uniform thickness and the sealing body is preferably a sheet of flexible material.

Owing to the uniform thickness, the parts adjacently of the cuts will be able to bend away readily and uniformly when water passes the valve and these parts will also spring back again readily.

In a preferred embodiment of the valve according to the invention the mounting edge is a flat flange. This flat flange can easily be clamped under for instance a clamping ring which is arranged around an inflow opening of a drain. The valve according to the invention can thus be held in uniformly distributed manner along the periphery of the valve. The stresses in the sealing body, which are created by water flowing past, will hereby be distributed evenly over the sealing body and the clamping ring.

The invention further relates to a combination of a drain and a valve according to the invention, wherein the drain has an elongate inflow opening, wherein a clamping edge is provided around the elongate inflow opening and wherein the sealing body of the valve is arranged in the inflow opening, wherein the mounting edge of the sealing body is clamped in the clamping edge of the drain.

In a preferred embodiment of the combination according to the invention the clamping edge is arranged releasably in the drain. Because the clamping edge is releasable, the sealing body can be easily removed together with the clamping edge from the drain, for instance in order to clean the sealing body.

In yet another embodiment of a combination of a drain and a valve according to the invention the drain has an elongate inflow opening, wherein a peripheral groove is arranged around the elongate inflow opening and wherein the sealing body of the valve is arranged in the inflow opening, wherein the mounting edge of the sealing body lies at least partially in the groove.

The mounting edge preferably comprises a thickened portion, which thickened portion is positioned clampingly and sealingly in the groove.

With this embodiment of the combination according to the invention the valve can be easily removed from the drain for cleaning purposes. The valve lies clampingly in the peripheral groove, whereby a good seal is obtained.

These and other features of the invention are further elucidated with reference to the accompanying drawings.
Figure 1 shows a perspective view of a valve not according to the invention.
Figures 2A and 2B show a cross-section of the valve according to figure 1 in two different positions.
Figure 3 shows a cross-sectional view of a valve according to the invention.
Figure 4 shows a perspective view with exploded parts of an embodiment of the combination according to the invention.
Figure 5 shows a perspective view of a valve not according to the invention.
Figure 6 shows a perspective top view of a valve according to the invention.
Figure 7 shows a perspective bottom view of the valve according to figure 6.
Figure 8 shows a cross-sectional view of the valve according to figure 6.
Figure 9 shows an embodiment of a combination according to the invention in cross-section.

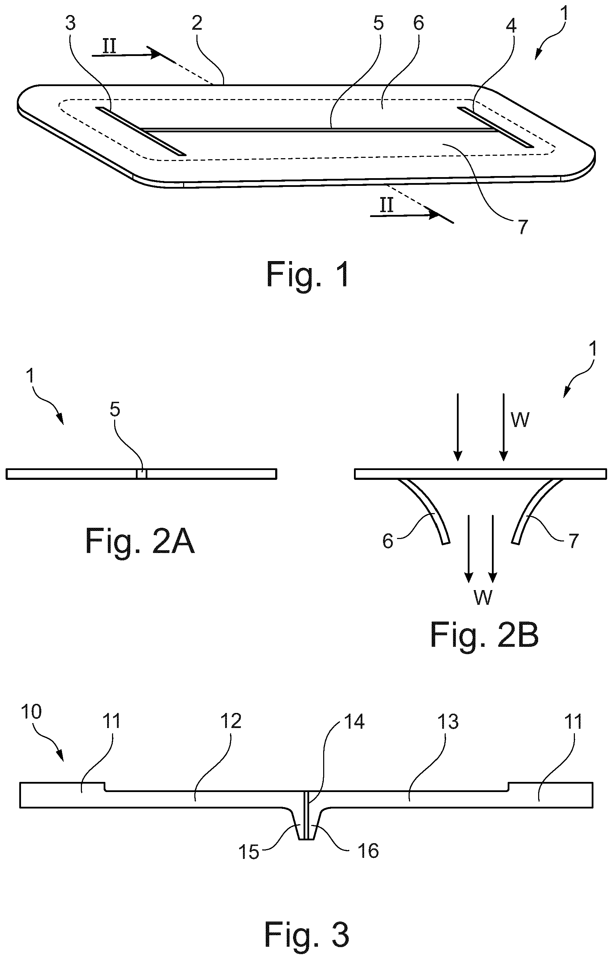

Figure 1 shows a valve not in accordance with the present invention. Valve 1 has an elongate sealing body from a silicone sheet, having along the periphery of the sealing body a mounting edge 2 for sealing mounting in an inflow opening. Because the sealing body is manufactured from a silicone sheet, the sealing body has a uniform thickness.

An H-shaped incision of two parallel cuts 3, 4 and one single connecting cut 5 is formed in the sealing body. Connecting cut 5 extends in the longitudinal direction of the elongate sealing body.

Figures 2A and 2B show valve 1 according to figure 1 in cross-section along the line II-II. In figure 2A the valve 1 is in sealing state.

Figure 2B shows valve 1 in permeable state, wherein water W passes valve 1. The pressure of the water W presses parts 6, 7 away so that an opening through which the water W can flow is created in valve 1. Because connecting cut 5 ends perpendicularly of parallel cuts 3, 4, parts 6, 7 will bend away uniformly under the pressure of the water W, and will not deform.

Figure 3 shows a cross-sectional view of an embodiment of a valve 10 according to the invention. Valve 10 has an elongate, thin-walled and flexible closing body consisting of a peripheral edge 11 and two parts 12, 13 which are separated from each other by a connecting cut 14. Although not shown, connecting cut 14 ends on either side in parallel cuts lying at right angles thereto, so that an H-shaped incision is formed in the sealing body, identically to the figures 1 and 2.

Peripheral edge 11 is slightly thicker than the two parts 12, 13 so that peripheral edge 11 can easily withstand a clamping force for clamping of valve 10. Depending flanges 15, 16 lying against each other are further provided along the edges of parts 12, 13 adjacently of cut 14. These flanges 15, 16 increase the contact surface along cut 14, whereby parts 12, 13 need not be wholly mutually aligned in order to still guarantee a good seal.

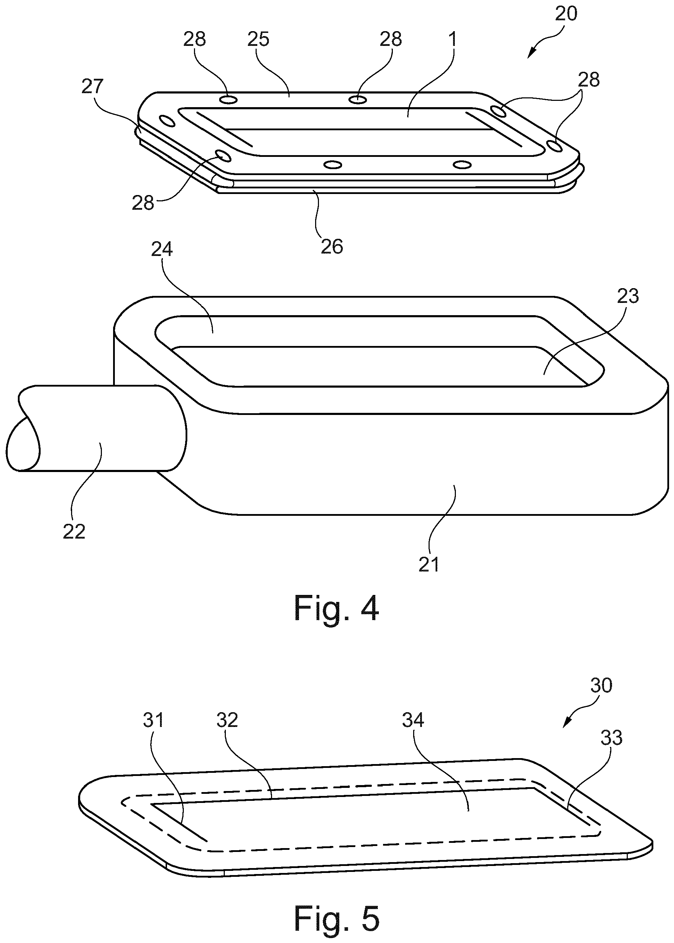

Figure 4 shows a perspective view of a combination 20 according to the invention. Combination 20 has a drain with a housing 21 and an outlet pipe connection 22. Provided at the top of housing 21 is an opening 23 with a depending flange 24 arranged along opening 23. A two-part clamping edge 25, 26 is arranged in this opening 24. An O-ring 27 is provided around the clamping edge 25, 26 so that clamping edge 25, 26 seals properly onto depending flange 24. The two parts 25, 26 of the clamping edge are for instance clamped together with screws 28.

Clamped between the two parts 25, 26 of the clamping edge is a valve 1 as shown in figure 1. Because clamping edge 25, 26 is removable from housing 21 of the drain, valve 1 can be easily cleaned and optionally replaced.

Figure 5 shows a perspective view of a valve not according to the invention.

Valve 30 is once again manufactured from a sheet of flexible material, such as silicone, and provided with an incision 31, 32, 33. Incision 31, 32, 33 is here U-shaped in that the connecting cut 32 leads to the ends of parallel cuts 31, 33. A single flap 34 is hereby formed, which can be pressed away by water and thus forms an opening in valve 30.

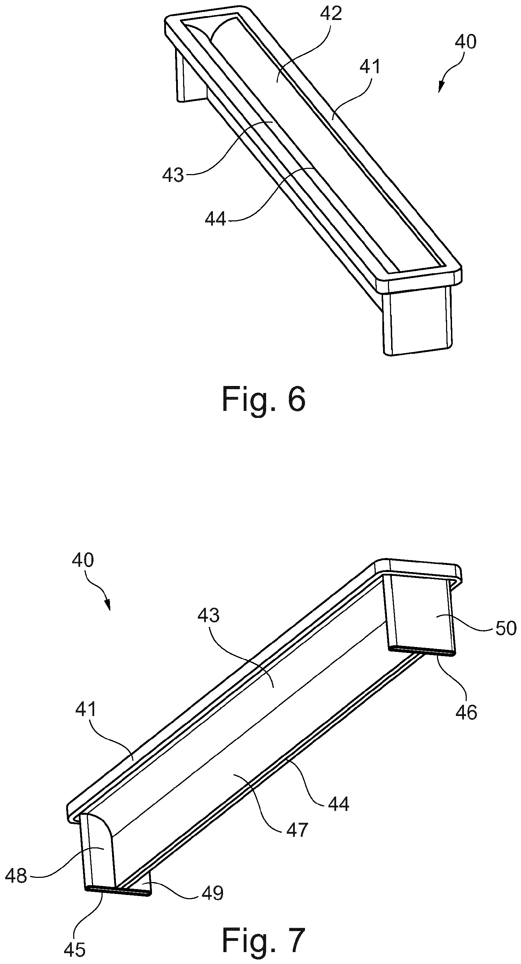

Figure 6 shows a perspective top view of an embodiment of a valve 40 according to the invention. Valve 40 has a sealing body with a uniform thickness. A mounting edge 41 is arranged on the upper side. From this mounting edge 41, the upper surface slopes down in two parts 42, 43 to a connecting cut 44.

As shown in figure 7, the connecting cut 44 connects two cuts 45, 46 lying at right angles thereto, thus forming an H-shaped incision. Depending flanges 47, 48, 49, 50 are arranged at cuts 44, 45, 46 for the purpose of increasing the contact surface of cuts 44, 45, 46 and thereby improving the seal. In addition, it will not be possible either for seal 40 to be pressed open in simple manner in the case of an overpressure in the sewer.

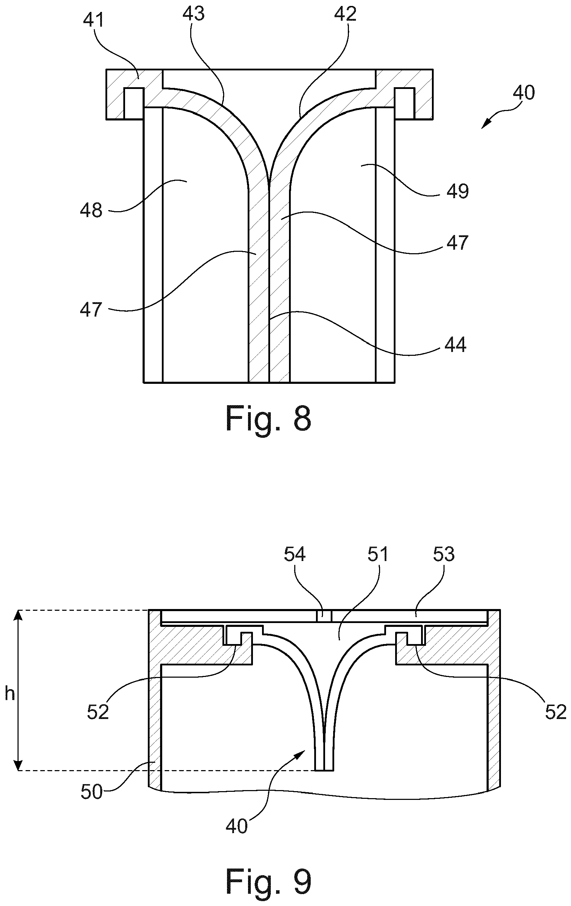

Figure 8 shows a cross-sectional view of the valve 40 according to figure 6. Clearly visible are the downward sloping parts 42, 43 of the upper surface, which lead to cut 44 and on which depending flanges 47 are arranged.

Figure 9 shows an embodiment of a combination according to the invention, wherein a valve 40 as shown in figures 6, 7 and 8 is arranged in a drain 50 which is provided on the upper side with an elongate inflow opening 51. Provided around inflow opening 51 is a peripheral groove 52 in which a part of the mounting edge 41 of valve 40 is placed. A sealing mounting of valve 40 in inflow opening 51 of drain 50 is thus obtained.

A grating 53 with an opening 54 is placed directly on valve 40. Because valve 40 is fully sealing, the overall height h can remain limited as compared to a drain provided with a usual siphon.

## Claims

1. Valve (10; 40) for an elongate inflow opening, which valve (10; 40) comprises an elongate, thin-walled and flexible sealing body (11, 12, 13; 41, 42, 43) wherein
- arranged in the sealing body (11, 12, 13; 41, 42, 43) there is an incision of two cuts (45, 46) arranged at a mutual distance and one single connecting cut (14; 44), wherein the connecting cut (14; 44) extends in longitudinal direction of the elongate sealing body (11, 12, 13; 41, 42, 43) and at an angle greater than 0° and smaller than 360°, preferably greater than 45° and smaller than 135°, to the two cuts (45, 46) arranged at the mutual distance; and
- a mounting edge (11; 41) is provided along the periphery of the sealing body (11, 12, 13; 41, 42, 43) for the purpose of sealing mounting in the inflow opening, wherein the connecting cut (14; 44) extends perpendicularly of the two cuts (45, 46) arranged at the mutual distance, such that an H-shaped or U-shaped cut is formed
wherein the two cuts (45, 46) arranged at the mutual distance are parallel, and
wherein depending flanges (15, 16; 47) lying against each other are provided at least along the edges of the connecting cut (14; 44),
**characterized in that**
depending flanges (48, 49, 50) lying against each other are provided along the edges of the two parallel cuts (45, 46).

2. Valve (10; 40) according to claim 1, wherein the sealing body (11, 12, 13; 41, 42, 43) is made of silicone.

3. Valve (40) according to any one of the foregoing claims, wherein the upper surface of the sealing body (41, 42, 43) slopes from the mounting edge (41) down to and in a direction perpendicularly of the connecting cut (44) wherein the connecting cut (44) is a one single cut.

4. Valve (10; 40) according to any one of the foregoing claims, wherein the mounting edge is a flat flange (11; 41).

5. Combination of a drain and a valve according to any one of the foregoing claims,
wherein the drain has an elongate inflow opening, wherein a clamping edge is provided around the elongate inflow opening and wherein the sealing body of the valve is arranged in the inflow opening, wherein the mounting edge of the sealing body is clamped in the clamping edge of the drain.

6. Combination according to claim 5, wherein the clamping edge is arranged releasably in the drain.

7. Combination of a drain (50) and a valve (40) according to any one of the claims 1-4,
wherein the drain (50) has an elongate inflow opening (51), wherein a peripheral groove (52) is arranged around the elongate inflow opening (51) and wherein the sealing body (41, 42, 43) of the valve (40) is arranged in the inflow opening (51), wherein the mounting edge (41) of the sealing body (41, 42, 43) lies at least partially in the groove (52).

8. Combination according to claim 7, wherein the mounting edge comprises a thickened portion, which thickened portion is positioned clampingly and sealingly in the groove.

## Patentansprüche

1. Ventil (10; 40) für eine langgestreckte Einlauföffnung, wobei das Ventil (10; 40) einen langgestreckten, dünnwandigen und flexiblen Dichtungskörper (11, 12, 13; 41, 42, 43) umfasst, wobei
- sich in dem Dichtungskörper (11, 12, 13; 41, 42, 43) angeordnet ein Einschnitt von zwei in einem gegenseitigen Abstand angeordneten Schnitten (45, 46) und einem einzelnen Verbindungsschnitt (14; 44) befindet, wobei sich der Verbindungsschnitt (14; 44) in Längsrichtung des langgestreckten Dichtungskörpers (11, 12, 13; 41, 42, 43) und in einem Winkel größer als 0° und kleiner als 360°, insbesondere größer als 45° und kleiner als 135°, zu den zwei in dem gegenseitigen Abstand angeordneten Schnitten (45, 46) erstreckt; und
- eine Montagekante (11; 41) entlang des Umfangs des Dichtungskörpers (11, 12, 13; 41, 42, 43) zwecks abdichtender Montage in der Einlauföffnung bereitgestellt ist,
wobei sich der Verbindungsschnitt (14; 44) senkrecht zu den zwei in dem gegenseitigen Abstand angeordneten Schnitten (45, 46) erstreckt, so dass ein H-förmiger oder U-förmiger Schnitt gebildet ist,
wobei die zwei in dem gegenseitigen Abstand angeordneten Schnitte (45, 46) parallel sind und
wobei nach unten weisende Flansche (15, 16; 47), die aneinander anliegen, mindestens entlang der Kanten des Verbindungsschnitts (14; 44) bereitgestellt sind,
**dadurch gekennzeichnet, dass**
nach unten weisende Flansche (48, 49, 50), die aneinander anliegen, entlang der Kanten der zwei parallelen Schnitte (45, 46) bereitgestellt sind.

2. Ventil (10; 40) nach Anspruch 1, wobei der Dichtungskörper (11, 12, 13; 41, 42, 43) aus Silikon besteht.

3. Ventil (40) nach einem der vorhergehenden Ansprüche, wobei sich die obere Fläche des Dichtungskörpers (41, 42, 43) von der Montagekante (41) nach unten und in eine Richtung senkrecht zu dem Verbindungsschnitt (44) neigt, wobei der Verbindungsschnitt (44) ein einzelner Schnitt ist.

4. Ventil (10; 40) nach einem der vorhergehenden Ansprüche, wobei die Montagekante ein flacher Flansch (11; 41) ist.

5. Kombination aus einem Abfluss und einem Ventil nach einem der vorhergehenden Ansprüche,
wobei der Abfluss eine langgestreckte Einlauföffnung aufweist, wobei eine Klemmkante um die langgestreckte Einlauföffnung herum bereitgestellt ist und wobei der Dichtungskörper des Ventils in der Einlauföffnung angeordnet ist, wobei die Montagekante des Dichtungskörpers in die Klemmkante des Abflusses geklemmt ist.

6. Kombination nach Anspruch 5, wobei die Klemmkante lösbar in dem Abfluss angeordnet ist.

7. Kombination aus einem Abfluss (50) und einem Ventil (40) nach einem der Ansprüche 1 bis 4, wobei der Abfluss (50) eine langgestreckte Einlauföffnung (51) aufweist, wobei eine umfangsseitige Nut (52) um die langgestreckte Einlauföffnung (51) herum angeordnet ist und wobei der Dichtungskörper (41, 42, 43) des Ventils (40) in der Einlauföffnung (51) angeordnet ist, wobei die Montagekante (41) des Dichtungskörpers (41, 42, 43) zumindest teilweise in der Nut (52) liegt.

8. Kombination nach Anspruch 7, wobei die Montagekante einen verdickten Abschnitt umfasst, wobei der verdickte Abschnitt klemmend und abdichtend in der Nut positioniert ist.

## Revendications

1. Valve (10 ; 40) pour une ouverture allongée d'écoulement entrant, laquelle valve (10 ; 40) comprend un corps d'étanchéité allongé, flexible et à paroi mince (11, 12, 13 ; 41, 42, 43), dans laquelle
- agencée dans le corps d'étanchéité (11, 12, 13 ; 41, 42, 43) est une incision de deux découpes (45, 46) agencées à une distance mutuelle et d'une seule découpe de liaison (14 ; 44), dans laquelle la découpe de liaison (14 ; 44) s'étend dans la direction longitudinale du corps d'étanchéité allongé (11, 12, 13 ; 41, 42, 43) et à un angle supérieur à 0 ° et inférieur à 360 °, de préférence supérieur à 45 ° et inférieur à 135 °, par rapport aux deux découpes (45, 46) agencées à la distance mutuelle ; et
- un bord de montage (11 ; 41) est prévu le long de la périphérie du corps d'étanchéité (11, 12, 13 ; 41, 42, 43) dans le but d'effectuer un montage à étanchéité dans l'ouverture d'écoulement entrant,
dans laquelle la découpe de liaison (14 ; 44) s'étend perpendiculairement des deux découpes (45, 46) agencées à la distance mutuelle, de telle sorte qu'une découpe en forme de H ou en forme de U soit formée, dans laquelle les deux découpes (45, 46) agencées à la distance mutuelle sont parallèles, et
dans laquelle des ailes pendantes (15, 16 ; 47) se trouvant l'une contre l'autre sont prévues au moins le long des bords de la découpe de liaison (14 ; 44),
**caractérisée en ce que**
des ailes pendantes (48, 49, 50) se trouvant les unes contre les autres sont prévues le long des bords des deux découpes parallèles (45, 46).

2. Valve (10 ; 40) selon la revendication 1, dans laquelle le corps d'étanchéité (11, 12, 13 ; 41, 42, 43) est fait de silicone.

3. Valve (40) selon l'une quelconque des revendications précédentes, dans laquelle la surface supérieure du corps d'étanchéité (41, 42, 43) s'incline depuis le bord de montage (41) vers le bas jusqu'à, et dans une direction perpendiculaire de, la découpe de liaison (44), dans laquelle la découpe de liaison (44) est une seule découpe.

4. Valve (10 ; 40) selon l'une quelconque des revendications précédentes, dans laquelle le bord de montage est une aile plate (11 ; 41).

5. Combinaison d'un drain et d'une valve selon l'une quelconque des revendications précédentes,
dans laquelle le drain a une ouverture allongée d'écoulement entrant, dans laquelle un bord de serrage est prévu autour de l'ouverture allongée d'écoulement entrant, et dans laquelle le corps d'étanchéité de la valve est agencé dans l'ouverture d'écoulement entrant, dans laquelle le bord de montage du corps d'étanchéité est serré dans le bord de serrage du drain.

6. Combinaison selon la revendication 5, dans laquelle le bord de serrage est agencé de façon amovible dans le drain.

7. Combinaison d'un drain (50) et d'une valve (40) selon l'une quelconque des revendications 1 à 4,
dans laquelle le drain (50) a une ouverture allongée d'écoulement entrant (51), dans laquelle une rainure périphérique (52) est agencée autour de l'ouverture allongée d'écoulement entrant (51) et dans laquelle le corps d'étanchéité (41, 42, 43) de la valve (40) est agencée dans l'ouverture d'écoulement entrant (51), dans laquelle le bord de montage (41) du corps d'étanchéité (41, 42, 43) se trouve au moins partiellement dans la rainure (52).

8. Combinaison selon la revendication 7, dans laquelle le bord de montage comprend une partie épaissie, laquelle partie épaissie est positionnée de façons serrée et étanche dans la rainure.
